(19) Europäisches Patentamt
European Patent Office
Office européen des brevets

(11) **EP 2 553 126 B1**

(12) **EUROPÄISCHE PATENTSCHRIFT**

(45) Veröffentlichungstag und Bekanntmachung des Hinweises auf die Patenterteilung:
**30.04.2014 Patentblatt 2014/18**

(21) Anmeldenummer: **11711857.0**

(22) Anmeldetag: **28.03.2011**

(51) Int Cl.:
**C21C 5/46** *(2006.01)* **F27D 3/16** *(2006.01)*
**F27D 1/02** *(2006.01)* **F23D 14/00** *(2006.01)*

(86) Internationale Anmeldenummer:
**PCT/EP2011/054759**

(87) Internationale Veröffentlichungsnummer:
**WO 2011/120937 (06.10.2011 Gazette 2011/40)**

(54) **VORRICHTUNG ZUR EINBLASUNG VON GAS IN EIN METALLURGISCHES GEFÄSS**

DEVICE FOR INJECTING GAS INTO A METALLURGICAL VESSEL

DISPOSITIF D'INSUFFLATION DE GAZ DANS UN RÉCIPIENT MÉTALLURGIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2010 DE 102010047969**
**31.03.2010 DE 102010013769**

(43) Veröffentlichungstag der Anmeldung:
**06.02.2013 Patentblatt 2013/06**

(73) Patentinhaber: **SMS Siemag AG**
**40237 Düsseldorf (DE)**

(72) Erfinder:
• **ODENTHAL, Hans-Jürgen**
**40822 Mettmann (DE)**

• **SCHLÜTER, Jochen**
**44265 Dortmund (DE)**
• **OLIVIER, Herbert**
**52072 Aachen (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**EP-A2- 0 235 621     EP-A2- 1 304 391**
**DE-A1- 2 342 003     DE-A1-102009 025 873**
**GB-A- 1 198 112**

**Beschreibung**

Die Erfindung betrifft eine Vorrichtung zur Einblasung von Gas in ein metallurgisches Gefäß nach dem Oberbegriff des Anspruchs 1.

Bei vielen Verfahren zur Stahlerzeugung, zum Beispiel dem Basic-Oxygen-Furnace-Verfahren ("BOF") oder dem Argon Oxygen Decarburization Verfahren ("AOD"), ist es vorgesehen, eine Lanze von oben in ein metallurgisches Gefäß bzw. Konverter zu fahren, um ein Gas wie etwa Sauerstoff aus einem definierten Abstand auf eine Metallschmelze zu blasen. Die Lanzen haben Blasköpfe mit meist mehreren Austrittsdüsen, aus denen das Gas zur Erzeugung einer oszillierenden Blasmulde mit Überschallgeschwindigkeit auf die Metallschmelze strömt. Solche Lanzen und Blasköpfe haben eine begrenzte Lebensdauer, wobei ein Verschleiß der Düsen unter anderem durch Verdichtungsstöße und/oder Kontakt der Düsenränder mit der heißen und reaktiven Umgebung im Konverter erfolgt.

Aus der EP 1 304 391A2, der GB 1 198 112A, der DE 23 42 003A1, der EP 0 235 621A2 und der DE 10 2009 025873 A1 sind Sauerstofflanzen mit Blasköpfen in ähnlicher Art bekannt.

Es ist die Aufgabe der Erfindung, eine Vorrichtung zur Einblasung von Gas in ein metallurgisches Gefäß anzugeben, deren Standzeit verbessert ist.

Diese Aufgabe wird für eine eingangs genannte Vorrichtung erfindungsgemäß mit den kennzeichnenden Merkmalen des Anspruchs 1 gelöst. Durch die Verstellbarkeit der Düsenteile unter Veränderung der Geometrie der Lavaldüse kann während des Betriebs eine Anpassung an sich ändernde Parameter wie etwa Düsen-Vordruck, Gas-Volumenstrom oder Gegendruck nach dem Düsenaustritt erzielt werden. Hierdurch erfolgt der Betrieb der Lavaldüse jederzeit in einem optimalen Arbeitspunkt, so dass Störungen der Gasströmung in oder nach dem Austrittsbereich zumindest verringert werden.

Unter einem Blaskopf im Sinne der Erfindung ist insbesondere eine Struktur am Ende einer Lanze zu verstehen. Dabei kann die Lanze in ein metallurgisches Gefäß eingefahren werden, um eine in dem metallurgischen Gefäß befindliche Metallschmelze mit Gas, insbesondere Sauerstoff, zu beströmen. Bei dem Gefäß handelt es sich bevorzugt um einen Konverter z.B. zur Stahlerzeugung. Grundsätzlich kann es sich aber auch um ein anderes Gefäß wie etwa zum Aufschmelzen von Schrott in einem Lichtbogenofen ("EAF", Electric Arc Furnace) handeln. Der Blaskopf kann je nach Anwendung oder Anforderung sowohl eine als auch mehrere Lavaldüsen umfassen. Er kann unter anderem für folgende metallurgischen Aggregate eingesetzt werden: BOF- und AOD-Konverter, Brenner- und Injektordüsen für den Elektrolichtbogenofen (EAF), Brenner- und Injektordüsen für den Reduktionsofen, Düsen für Vakuumbehandlungsanlagen (VOD, RH).

Bei einer bevorzugten Ausführungsform der Erfindung umfasst die Veränderung der Geometrie eine Veränderung eines kleinsten Durchtrittsquerschnitts zwischen dem Eintrittsabschnitt und dem Austrittsabschnitt. Der kleinste Durchtrittsquerschnitt einer Lavaldüse ist einer der wesentlichen Parameter für ihre Auslegung und kann auf einfache Weise beeinflusst werden.

Allgemein vorteilhaft ist der erste Düsenteil als um eine Kanalachse rotationssymmetrischer Kanal ausgebildet, wobei der zweite Düsenteil als entlang der Kanalachse in den Kanal ragendes Dornglied ausgebildet ist. Hierdurch wird die Düsengeometrie auf einfache Weise durch das Verschieben des Dornes beeinflussbar. In besonders bevorzugter Weiterbildung hat das Dornglied eine sich verjüngende Spitze, wobei die sich verjüngende Spitze in einen Bereich kleinsten Durchtrittsquerschnitts des Kanals erstreckt. Auf diese Weise kann ein kleinster Durchtrittsquerschnitt der Lavaldüse besonders einfach und genau durch ein Verschieben des Dornglieds parallel zu der Kanalachse verändert werden. Zudem ist die sich verjüngende, zum Beispiel konisch geformte Spitze des Dornglieds so ausformbar, dass die Erzeugung von Turbulenzen im Gasstrom vermindert wird.

Bei einer bevorzugten Weiterbildung ist das Dornglied über einen Verstellantrieb entlang der Kanalachse verschiebbar, um eine definierte Einstellung der Düsengeometrie zu ermöglichen. Bei einer möglichen Weiterbildung umfasst der Verstellantrieb dabei einen hydraulischen oder pneumatischen Aktuator. Bei einer alternativen oder ergänzenden Weiterbildung umfasst der Verstellantrieb einen elektrischen Antrieb, der in bevorzugter, aber nicht notwendiger Detailgestaltung einen elektrischen Energiespeicher im Bereich des Blaskopfes aufweist. Durch einen solchen Energiespeicher kann auf Versorgungsleitungen des Verstellantriebs, die durch die oft sehr lange Lanze geführt sind, ganz oder teilweise verzichtet werden.

Allgemein vorteilhaft ist im Bereich des Blaskopfes ein elektrischer Drucksensor angeordnet, wodurch der Druck des Gases z.B. als elektrisches Signal an eine Steuerelektronik gemeldet werden kann. In Abhängigkeit von Änderungen des Gasdrucks kann dann die Geometrie der Lavaldüse durch Verstellung der Düsenteile nachgefahren werden.

Bei einer alternativen Ausführungsform der Erfindung umfasst der Verstellantrieb eine durch den Druck des Gases betriebene Mechanik. Vorteilhaft, aber nicht notwendig kann dabei auf Versorgungsleitungen des Verstellantriebs verzichtet werden.

Bei einer allgemein vorteilhaften Detailgestaltung der Erfindung ist der Verstellantrieb lösbar an dem Blaskopf festlegbar. Hierdurch kann der Verstellantrieb mehrfach verwendet werden, wobei der Blaskopf als Verschleißteil betrachtet wird. Insbesondere kann ein erfindungsgemäßer Verstellantrieb so ausgelegt sein, dass er in herkömmliche Blasköpfe einsetzbar ist, gegebenenfalls nach einer entsprechenden Nachbearbeitung der herkömmlichen Blasköpfe.

Gemäß der Erfindung sind an dem Blaskopf mehrere Lavaldüsen angeordnet, welche jeweils verstellbare zweite Düsenteile aufweisen und wobei die bewegliche Düsenteile, zum Beispiel Dornglieder, mehrerer oder sämtlicher der Lavaldüsen mittels desselben Verstellantriebs simultan verstellbar sind.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.

Fig. 1     zeigt eine schematische Schnittansicht einer Lavaldüse.

Fig. 2     zeigt eine schematische Schnittansicht einer Lavaldüse eines ersten Ausführungsbeispiels einer erfindungsgemäßen Vorrichtung.

Fig. 3     zeigt eine Schnittansicht eines Blaskopfes eines zweiten Ausführungsbeispiels einer erfindungsgemäßen Vorrichtung.

Fig. 4     zeigt eine räumliche Ansicht eines Verstellantriebs der Vorrichtung aus Fig. 3 von vorne.

Fig. 4a    zeigt eine räumliche Ansicht eines Verstellantriebs der Vorrichtung aus Fig. 3 von hinten.

Fig. 5     zeigt eine Schnittansicht eines Blaskopfes eines dritten Ausführungsbeispiels einer erfindungsgemäßen Vorrichtung in einem ersten Betriebzustand.

Fig. 6     zeigt den Blaskopf aus Fig. 5 in einem zweiten Betriebszustand.

Fig. 7     zeigt den prinzipiellen Zusammenhang zwischen dem Flächenverhältnis $A_e/A^*$ bzw. der Austritts-Mach-Zahl $Ma_e$ und dem Druckverhältnis $p_0/p_u$ für die angepasste Lavaldüsenströmung.

Fig. 8     zeigt die qualitative Strömungsstruktur innerhalb und außerhalb einer Lavaldüse im a) Auslegungszustand, b) unterkritischen Zustand, c) überkritischen Zustand. Die Lavaldüse wird mit Sauerstoff betrieben, der in eine heiße Umgebung von $Tu = 1650°C$ eintritt.

Bei dem metallurgischen Gefäß handelt es sich bevorzugt um einen Konverter (BOF - Basic Oxygen Furnace; AOD - Argon Oxygen Decarburization) zur Stahl- bzw. Edelstahlerzeugung. Grundsätzlich kann es sich aber auch um ein anderes metallurgisches Gefäß, wie etwa einen Elektro-Lichtbogenofen (EAF - Electric Arc Furnace) zum Aufschmelzen von Schrott handeln.

Bei vielen Verfahren zur Stahlerzeugung, zum Beispiel dem BOF-Verfahren, ist es vorgesehen, eine Blaslanze (Kurzform: Lanze) von oben in ein metallurgisches Gefäß, zum Beispiel in einen Konverter zu fahren, um ein Gas, meist Sauerstoff, aus einem definierten Abstand auf eine Metallschmelze zu blasen. Im Blaskopf befinden sich mehrere, unter einem bestimmten Winkel angeordnete Lavaldüsen, die den Sauerstoff auf Überschallgeschwindigkeit beschleunigen. Der Blaskopf ist aus Kupfer gegossen oder geschmiedet und wird an die ca. 20 m lange Lanze angeschweißt. Lanze und Blaskopf werden durch umlaufendes, unter hohem Druck stehendem Wasser gekühlt, wobei der Wasserzulauf durch einen ringförmigen Kanal im Lanzeninneren und der Wasserrücklauf durch einen ringförmigen Kanal im Lanzenäußeren erfolgt.

Der Sauerstoff tritt mit etwa zweifacher Schallgeschwindigkeit und hohem Impuls aus den Düsen des Blaskopfes aus, trifft nach ca. 1.4 m (dies entspricht der minimalen Arbeitsposition der Blaslanze über dem Schmelzenbad, u. a. abhängig vom Düsenanstellwinkel) bis 3.5 m (dies ist die maximale Lanzenposition über dem Schmelzenbad, die nur zu Blasbeginn eingestellt wird mit dem Ziel, ein Aufsetzen der Blaslanze auf den Schrott zu verhindern) auf die Schmelze, erzeugt eine oszillierende Blasmulde und sorgt für die gewünschte Entkohlungsreaktion der Form $C + \frac{1}{2} O_2 \rightarrow CO$. Durch die Expansion im divergenten Düsenteil kühlt sich der Sauerstoff bis zum Düsenaustritt auf ca. -100°C ab, wodurch die Düsen sowohl von der Wasserseite als auch von der Gasseite her intensiv gekühlt werden.

Eine Lavaldüse besteht aus einem sich verjüngendem, so genannten konvergenter Einströmbereich und einem sich erweiterndem, so genannten divergenten Ausströmbereich; häufig findet man den Begriff konvergent-divergente Düse (*CD nozzle*) anstelle von Überschall- oder Lavaldüse. Das Gas wird im konvergenten Teil beschleunigt, erreicht für entsprechende Druckverhältnisse im engsten Querschnitt (Düsenhals, *throat*) zwischen dem konvergenten und divergenten erstmals Schallgeschwindigkeit und expandiert im divergenten Teil auf Überschallgeschwindigkeit. Die strömungstechnischen Größen im Eintritt der Düse werden mit dem Index "0", im engsten Querschnitt mit "*" und im Austritt mit "e" bezeichnet. Stromabwärts der Düse befindet sich die heiße Umgebung, Index "u".

Jede Lavaldüse kann hinsichtlich der gegebenen strömungstechnischen Auslegungsgrößen

1. Sauerstoff-Volumenstrom V ,

2. Eintrittsdruck des Sauerstoffs in die Lavaldüse $p_0$,

3. Statischer Gegendruck im Konverter bzw. metallurgischen Gefäß $p_u$

nur für einen einzigen Betriebspunkt (*design-point*) ausgelegt werden, in dem die Düse optimal arbeitet. Wenn alle Düsen im Blaskopf exakt im Auslegungspunkt betrieben werden, die Sauerstoffstrahlen bis zum Düsenaustritt an der Düsenwand anliegen, die Kühlwasserzuführung aufrecht erhalten wird und keine Verbärung des Blaskopfes vorliegt, ist der Düsenverschleiß folglich minimal. In diesem Fall können Standzeiten der Blaslanze von bis zu 800 Schmelzen erzielt werden. Ansonsten ist die Lebensdauer der Blasköpfe begrenzt, wobei ein Verschleiß der Düsen unter anderem durch Verdichtungsstöße und/oder Kontakt der Düsenränder mit der heißen und reaktiven Umgebung im Konverter erfolgt.

Der Verschleißmechanismus wird im Folgenden erörtert:

Im täglichen Stahlwerksbetrieb müssen die strömungstechnischen Auslegungsgrößen V , $p_0$ und $p_u$ häufig variiert werden, um auf unvorhergesehene (Auswurf von Stahl und Schlacke aus dem Konvertermund, Druckschwankungen im Sauerstoffnetz, Zugabe von Kühlerz während der Hauptblasphase) und aktuelle Prozessereignisse (Probennahme mittels Sublanze während des Blasbetriebs) reagieren zu können. Dadurch weicht die Düsenströmung für eine mehr oder weniger lange Zeitdauer vom idealen Auslegungszustand ab. Es bilden sich inner- und außerhalb der Düse komplexe Störungsmuster (*diamond pattern*) in Form von Verdichtungsstößen und Expansionswellen, die zum Verschleiß der Düsenkante führen.

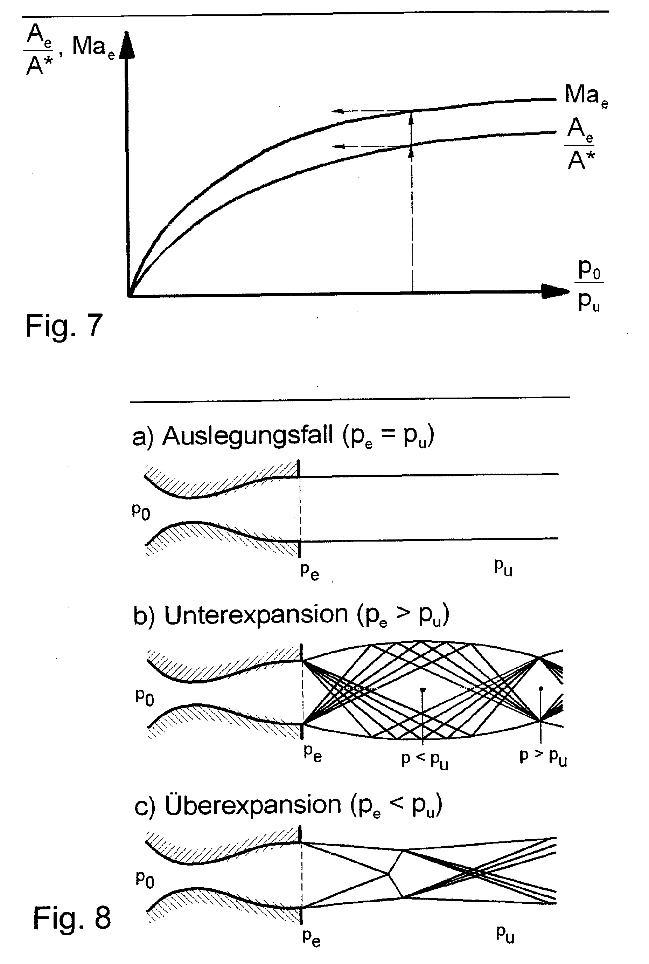

Fig. 8 zeigt den Einfluss des Druckverhältnisses $p_o/p_u$ auf die Strömungsstruktur im Sauerstoffstrahl.

Man bezeichnet die Düse als angepasst, wenn der Austrittsdruck $p_e$ gleich dem Umgebungsdruck $p_u$ ist.

Entsprechend der isentropen Stromfadentheorie nimmt in Fig. 8a das Druckverhältnis zwischen dem engsten Querschnitt und dem Eintritt einen bestimmten Wert an, für Sauerstoff ergibt sich $p^*/p_0 = 0.528$. Analoge Aussagen gelten auch für das Temperatur- und Dichteverhältnis. Die Länge des Überschallstrahls ist maximal und der Sauerstoffstrahl trifft für eine gegebene Düsengeometrie mit maximalem Impuls auf die Stahlschmelze.

Man bezeichnet die Düse als nicht angepasst, wenn der Druck $p_e$ im Austrittsquerschnitt vom Umgebungsdruck $p_u$ (dies ist der statische Druck im Konverter) abweicht. Im Gegensatz zum Unterschallstrahl, der stets bei Gleichdruck an der Düsenmündung austritt, weil der Mündungsdruck einen regulierenden Einfluss auf die Strömung ausübt, kann der Überschallstrahl nicht nur gegen Gleichdruck und gegen beliebig starken Unterdruck, sondern auch bis zu einem gewissen Grad gegen Überdruck ausströmen.

Ist $p_e > p_u$, siehe Unterexpansion in Fig. 8b, erfordert dies eine Nachexpansion hinter dem Austrittsquerschnitt. An der Düsenaustrittskante setzen Expansionswellen (*expansion wave*) an und der Strahl erweitert sich außerhalb der Düse. Die sich kreuzenden Wellen des Expansionsfächers werden an der Freistrahlgrenze als Kompressionswellen reflektiert. Im Strahlkern ist der Druck stromab der Expansionswellen kleiner als der Umgebungsdruck ($p < p_u$), stromab der Kompressionswellen größer als der Umgebungsdruck ($p < p_u$). Das periodische Wechselspiel von Expansion und Kompression setzt sich so lange fort, bis Unterschallgeschwindigkeit erreicht wird.

Ist $p_e < p_u$, siehe Überexpansion in Fig. 8c, geht von den Austrittskanten der Düse ein System aus schrägen Verdichtungsstößen (*shock wave*) aus. Ein Verdichtungsstoß ist mit einer nicht stetigen Änderung der Größen Druck p, Temperatur T, Dichte p, Entropie s, Mach-Zahl Ma und Strömungsgeschwindigkeit u verbunden. Während p, T, p und s zunehmen, sinken Ma und u ab. Hinter dem senkrechten Verdichtungsstoß herrscht immer Unterschallgeschwindigkeit. Der Freistrahl wird eingeschnürt und der Druck im Strahlzentrum steigt stromabwärts auf Werte über dem Gegendruck an. Die Verdichtungswellen werden am Freistrahlrand des Gasstrahls als Expansionswellen reflektiert und der statische Druck im Strahl sinkt. Dieser Vorgang wiederholt sich periodisch, bis die wachsenden Mischungszonen am Strahlrand das Strömungsfeld beherrschen und der Überschallstrahl in einen Unterschallstrahl überführt wird.

Als Folge der schrägen Verdichtungsstöße bildet sich am Düsenaustritt eine unregelmäßige Unstetigkeitsstelle, an der die Strömung abreißt. Es entsteht ein lokales Rezirkulationsgebiet. Der tatsächliche Austrittsquerschnitt liegt nun in der Düse und passt nicht mehr zum Austrittsdruck $p_e$ des geometrischen Austrittsquerschnitts. Die Austrittsfläche ist durch die Lage der Abrisskante festgelegt. Als Folge dessen kann heißes Prozessgas aus dem Konverter über das Rezirkulationsgebiet in die Düse und an die Kupferwand gelangen. Die Kühlwirkung wird herabgesetzt und der lokale Verschleiß wird erhöht. Hat der Verschleiß an einer bestimmten Stelle am Diffusoraustritt erst einmal eingesetzt, so wird diese Stelle im weiteren Konverterbetrieb auch besonders intensiv durch Konvertergas beaufschlagt. Das Kupfer verschleißt aufgrund des sich ständig vergrößernden Rezirkulationsgebietes mehr und mehr. Die Gefahr eines Wasserdurchbruchs steigt.

Während unterexpandierende Düsen ($p_e > p_u$) hinsichtlich des Verschleißes unkritisch sind, sinkt die Lebensdauer bei überexpandierenden Düsen ($p_e < p_u$), also solchen Lanzen, die mit zu niedrigem Düsen-Vordruck gefahren werden, aufgrund der fehlenden Kühlwirkung durch den expandierenden Sauerstoff rapide ab. In diesem Fall kann der lokale Druck nur über Verdichtungsstöße auf den Umgebungsdruck angehoben werden. Dabei ist es unerheblich, ob $p_u$ oder $p_0$ variiert wird, da in jedem Fall die aufeinander abgestimmten Werte $p^*/p_0$ und $A^*/A_e$ des Auslegungszustandes verändert werden.

Vor diesem Hintergrund ist es die Aufgabe der Erfindung, eine Vorrichtung zur Einblasung von Gas in ein metallurgisches Gefäß anzugeben, deren Standzeit deutlich verbessert ist. Die Vorrichtung erzeugt eine an die vorherrschenden Strömungsbedingungen angepasste, störungsfreie und daher verschleißminimierte Düsenströmung bei gleichzeitig verbesserten, weil reproduzierbaren metallurgischen Betriebsbedingungen.

Durch die erfindungsgemäße Verstellbarkeit der Geometrie der Lavaldüse kann die Düsenkontur an sich ändernde Strömungsbedingungen, wie Gas-Volumenstrom V, Gas-Eintrittsdruck in die Lavaldüse $p_0$ oder statischer Gegendruck $p_u$ im Konverter angepasst werden. Hierdurch erfolgt der Betrieb der Lavaldüse stets im optimalen Arbeitspunkt, so dass Störungen der Gasströmung in oder nach dem Austrittsbereich vermieden oder zumindest verringert werden.

Die Auslegung einer Lavaldüse erfolgt für den Auslegungszustand (Nennbetriebszustand), bei dem am Düsenaustritt keine Störungen in der Strömung, d. h. ohne Nachkompression oder -expansion, vorliegen. In diesem Fall ist der Druck im Düsenstrahl gleich dem Umgebungsdruck.

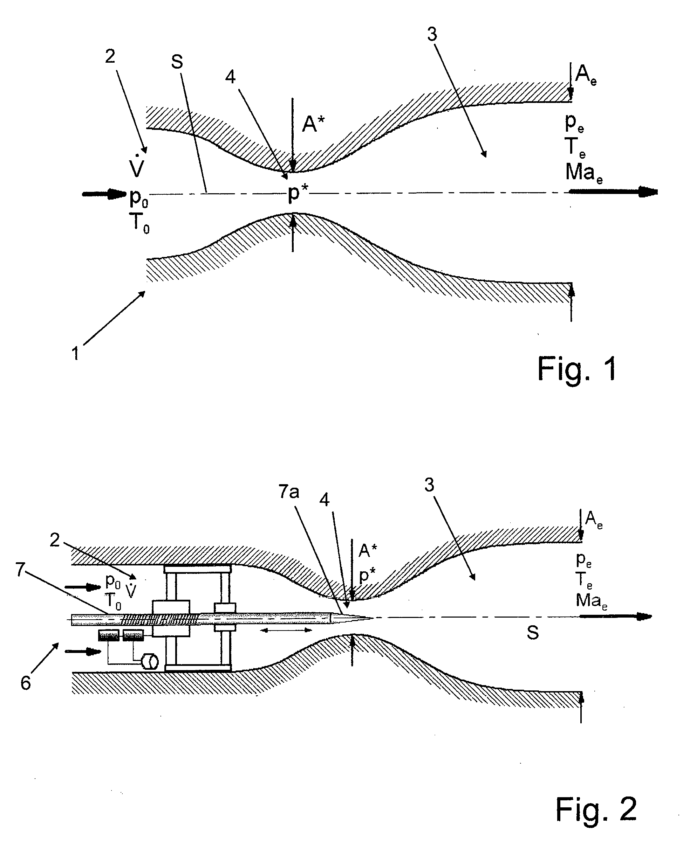

In Fig. 1 ist eine allgemeine, herkömmliche Lavaldüse 1 gezeigt, die einen konvergenten Eintrittsbereich 2 und einen divergenten Austrittsbereich 3 aufweist. Die Lavaldüse 1 ist als um die Achse S rotationssymmetrischer Kanal ausgebildet, der zwischen dem konvergenten Teil 2 und dem divergenten Teil 3 einen Bereich des engsten Querschnitts 4 mit einer minimalen Querschnittsfläche $A^*$ aufweist. Am Ende des divergenten Teils 3 hat die Düse eine Querschnittsfläche $A_e$, wobei $A_e > A^*$ gilt.

Ein in den konvergenten Teil mit dem Ruhedruck $p_0$ und der Ruhetemperatur $T_0$ einströmendes Gas, zum Beispiel Sauerstoff, mit dem Volumenstrom V strömt in der Lavaldüse auf bekannte Weise und verlässt den Austrittsbereich mit Überschallgeschwindigkeit (Mach-Zahl Ma > 1) in einen austrittsseitigen Umgebungsdruck $p_u$. Für die angepasste Düse ist das Flächenverhältnis $A^*/A_e$ eine Funktion des Druckverhältnisses $p_u/p_0$, wobei dieser Zusammenhang unter der Annahme einer quasi-eindimensionalen, isentropen Düsenströmung wie folgt lautet:

$$\frac{A^*}{A_e} = \frac{\left(\frac{p_u}{p_0}\right)^{\frac{1}{\gamma}} \cdot \sqrt{1 - \left(\frac{p_u}{p_0}\right)^{\frac{\gamma-1}{\gamma}}}}{\sqrt{\frac{\gamma-1}{2}\left(\frac{2}{\gamma+1}\right)^{\frac{\gamma+1}{\gamma-1}}}} \qquad \text{das heißt} \quad \frac{A^*}{A_e} = f\left(\frac{p_u}{p_0}\right) \qquad (1)$$

Ersetzt man das Druckverhältnis durch die Mach-Zahl, so erhält man

$$\frac{A^*}{A_e} = \frac{Ma_e}{\left[\frac{2}{\gamma+1}\left(1 + \frac{\gamma-1}{2}Ma_e^2\right)\right]^{\frac{\gamma+1}{2(\gamma-1)}}} \qquad (2)$$

mit dem Isentropenexponenten $\gamma$, der für Sauerstoff etwa 1,4 beträgt.

Unter Berücksichtigung der isothermen Zustandsgleichung erhält man für den Massenstrom durch die Düse:

$$\dot{m} = \rho_N \dot{V}_N = \rho^* u^* A \sim \frac{p_0}{\sqrt{T_0}} \cdot A^* \qquad (3)$$

Hierin ist $\rho_N$ die Normdichte und $\dot{V}_N$ der Normgas-Volumenstrom. Die Gleichung (3) verdeutlicht die Abhängigkeit des Massenstromes $\dot{m}$ vom Ruhedruck $p_0$. Bei konstanten Werten für die Ruhetemperatur $T_0$, den Halsquerschnitt $A^*$ und den Umgebungsdruck $p_u$ sinkt der Massenstrom $\dot{m}$ mit abnehmendem Ruhedruck $p_0$ ab, d. h. die Düse arbeitet dann nicht mehr im Auslegungszustand.

Fig. 7 verdeutlicht diese Zusammenhänge anhand des Druckverhältnisses $p_0/p_u$. Sinkt der Ruhedruck $p_0$, so sinkt auch für konstanten Umgebungsdruck $p_u$ das Druckverhältnis $p_0/p_u$. Soll die Düse weiterhin im angepassten Modus betrieben werden, so muss das Flächenverhältnis $A_e/A^*$ reduziert werden. Bei Erhöhung des Ruhedruckes $p_0$ über den Auslegungswert ist das Flächenverhältnis $A_e/A^*$ entsprechend zu erhöhen. Dies geschieht in der vorliegenden Erfindung durch das Einschieben eines Dorns in den engsten Querschnitt A*.

Bei einer ersten möglichen Ausgestaltung der Erfindung gemäß Fig. 2 ist die Lavaldüse 1 insgesamt in einem Blaskopf 5 angeordnet, wobei das Gas über Zuleitungen 6 dem Eintrittsbereich 2 zugeführt wird. Der Blaskopf sitzt am Ende einer Lanze (nicht dargestellt), die in ein metallurgisches Gefäß (nicht dargestellt), insbesondere Konverter (BOF/AOD) zur Stahlherstellung, einfahrbar ist.

Die in Fig. 2 gezeigte Düse 1 hat einen ersten Düsenteil, der den aus Eintrittsbereich 2 und Austrittsbereich 3 geformten Kanal umfasst.

Ein zweiter Düsenteil 7 ist als ein Dornglied ausgebildet, das als Zylinder mit einer sich konisch verjüngenden Spitze 7a ausgeformt ist und rotationssymmetrisch auf der Achse S angeordnet ist. Das Dornglied 7 ist entlang der Achse S relativ zu den ersten Düsenteilen 2, 3 verfahrbar, wobei je nach Position des Dornglieds 7 die Spitze 7a mehr oder weniger weit in den Bereich des kleinsten Durchtrittsquerschnitts 4 hineinragt. Entsprechend ist die Fläche A* des kleinsten Durchtrittsquerschnitts über die Position des Dornglieds 7 veränderlich, so dass die Geometrie der Lavaldüse gezielt verstellbar ist. Gemäß Gleichungen (1) und (2) kann somit auf Änderungen der äußeren Parameter wie zum Beispiel dem eintrittsseitigen Gasdruck $p_o$ durch Anpassung der Düsengeometrie reagiert werden.

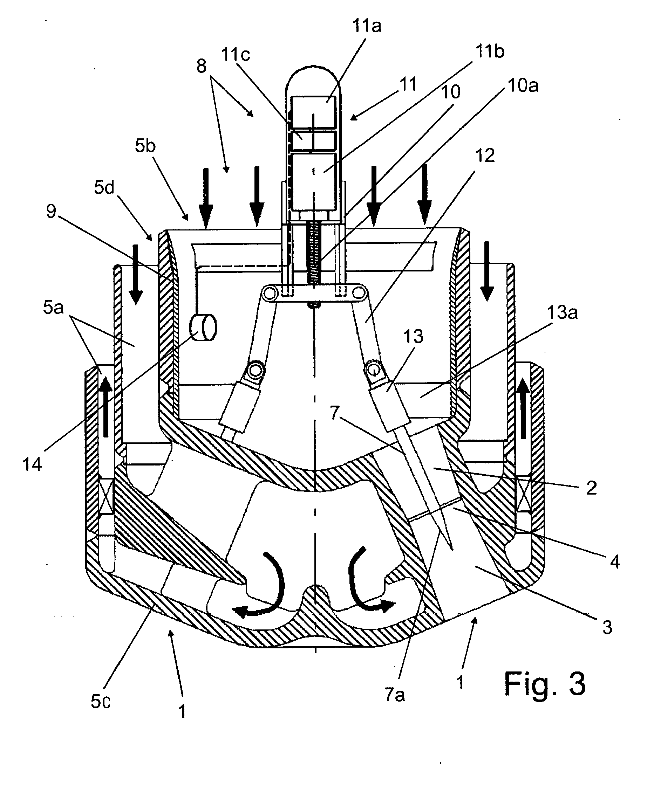

Fig. 3 zeigt ein weiteres Ausführungsbeispiel der Erfindung, bei dem das in Fig. 2 schematisch dargestellte Grundprinzip einer erfindungsgemäßen Vorrichtung einige konstruktive Detailgestaltungen aufweist.

Dargestellt ist ein weitgehend herkömmlicher Blaskopf 5, wie er an der Spitze von Lanzen (nicht dargestellt) zur Sauerstoffeinblasung im Konverter Verwendung findet. Insbesondere betrifft dies die üblichen BOF- und AOD-Verfahren zur Stahlherstellung. Der Blaskopf 5 hat seitliche Kühlmittelkanäle 5a, die auf bekannte Weise mit Kühlwasser beströmt werden. Die Gaszuführung durch die Lanze erfolgt in einem Gaskanal 5b.

In einen massiven Endbereich 5c des Blaskopfes 5 sind mehrere Lavaldüsen 1 bzw. Düsenteile im Sinne der Erfindung eingearbeitet. Vorliegend sind fünf Lavaldüsen 1 vorgesehen, die in gleichem Winkelabstand zueinander und mit einer Neigung gegenüber einer Mittenachse des Blaskopfes nach außen gerichtet sind.

In einem Zentralbereich 5d des Blaskopfes ist ein Verstellantrieb 8 lösbar festgelegt, zum Beispiel mittels Madenschrauben (nicht dargestellt). Der Verstellantrieb 8 umfasst vorliegend ein zylindrisches Gehäuse 9, einen parallel zu der Mittenachse des Blaskopfes verfahrbaren Stempel 10 und einen elektrischen Antrieb 11.

Der Stempel 10 kann zum Beispiel über ein Feingewinde 10a mittels des elektrischen Antriebs 11 positioniert werden. An dem Stempel sind fünf Lenker 12 angebracht, die an ihrem anderen Ende jeweils an einem von fünf Dorngliedern 7 angelenkt ist. Jedes der Dornglieder 7 ist in einer an dem Gehäuse 9 über einen Arm 13a festgelegten Linearführung 13 gleitend geführt und mündet mit seiner Spitze 7a in eine der fünf Lavaldüsen 1. Die Führungen 13 führen die Dornglieder 7 dabei jeweils zentrisch auf einer jeweiligen Symmetrieachse der kanalförmigen ersten Düsenteile 2, 3.

Durch die Verstellung des Stempels 10 werden sämtliche Dornglieder bzw. zweiten Düsenteile 7 simultan in die ersten Düsenteile 2, 3 mehr oder weniger eingefahren, so dass alle Lavaldüsen durch nur eine Antriebseinheit 11 nachgefahren werden.

Im Bereich des Verstellantriebs 8 ist zudem ein elektronischer Drucksensor 14 angeordnet, über den der momentane eingangsseitige Druck der Lavaldüsen 1 ermittelt werden kann, um die Düsengeometrie zur Optimierung des austrittsseitigen Gasstrahls nachzufahren.

Zur Versorgung und Steuerung des Verstellantriebs sind verschiedene Ansätze geeignet. Zum Beispiel können Versorgungs- und/oder Signalleitungen zur Verbindung mit dem elektrischen Antrieb 11 und/oder Drucksensor 14 durch die Lanze zu dem Blaskopf 5 geführt sein. Besonders bevorzugt kann in dem Blaskopf aber auch ein elektrischer Energiespeicher 11a vorgesehen sein, der einen Elektromotor 11 b und/oder eine Steuerelektronik 11c und/oder den Sensor 14 mit Energie versorgt. Hierdurch kann ganz oder teilweise auf Versorgungsleitungen verzichtet werden. Insbesondere, aber nicht abschließend, sind folgende Varianten möglich:

- Der elektrische, gegebenenfalls vom Energiespeicher 11a versorgte Drucksensor 14 regelt unmittelbar die Antriebseinheit 11. Hierzu kann in dem Blaskopf eine entsprechende Steuerelektronik 11 c vorgesehen sein.
- Der elektrische, gegebenenfalls vom Energiespeicher versorgte Drucksensor 14 sendet das Drucksignal nach außen. Die Regelung der Antriebseinheit erfolgt dann drahtlos über einen externen Steuerrechner.
- Der Druck wird über ein im Inneren der Lanze angebrachtes dünnes Stahlrohr erfasst und an einem Lanzenschlitten mit einem Differenzdruckaufnehmer gemessen. Dieses Signal wird bevorzugt drahtlos zum Steuerrechner übertragen, der wiederum die Antriebseinheit steuert.

Der Verstellantrieb 8 ist vorliegend zusammen mit den Dorngliedern 7 und dem Gehäuse 9 in den Blaskopf 5 einsetzbar bzw. diesem entnehmbar. Dies ermöglicht insbesondere die Kombination mit herkömmlichen Blasköpfen. Dabei können eventuell, aber nicht notwendig Nachbearbeitungen der herkömmlichen Blasköpfe, etwa ein Ausdrehen eines zentralen Aufnahmebereichs für den Verstellantrieb, erforderlich werden.

Bei einem Wechsel des Blaskopfes werden bevorzugt sämtliche Leitungen (elektrisch oder bei anderen Ausführungsformen auch pneumatisch oder hydraulisch) durch Stecker bzw. Kupplungen an- und abgekoppelt.

Die einzelnen Dornglieder bzw. zweiten Düsenteile 7 sind als Verschleißteile auswechselbar mit dem Verstellantrieb 8 verbunden.

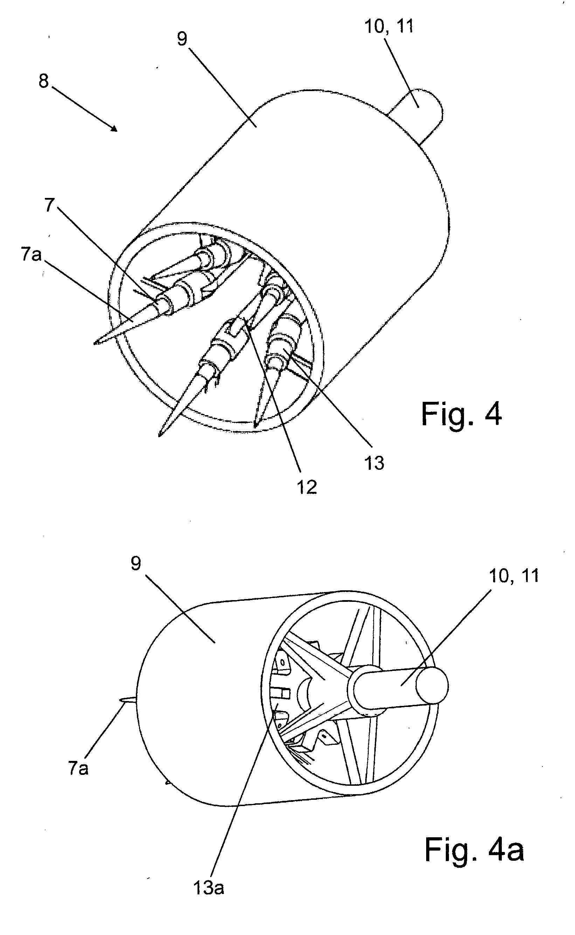

Fig. 4 und Fig. 4a zeigen den topfförmigen, wieder verwertbaren Einsatz.

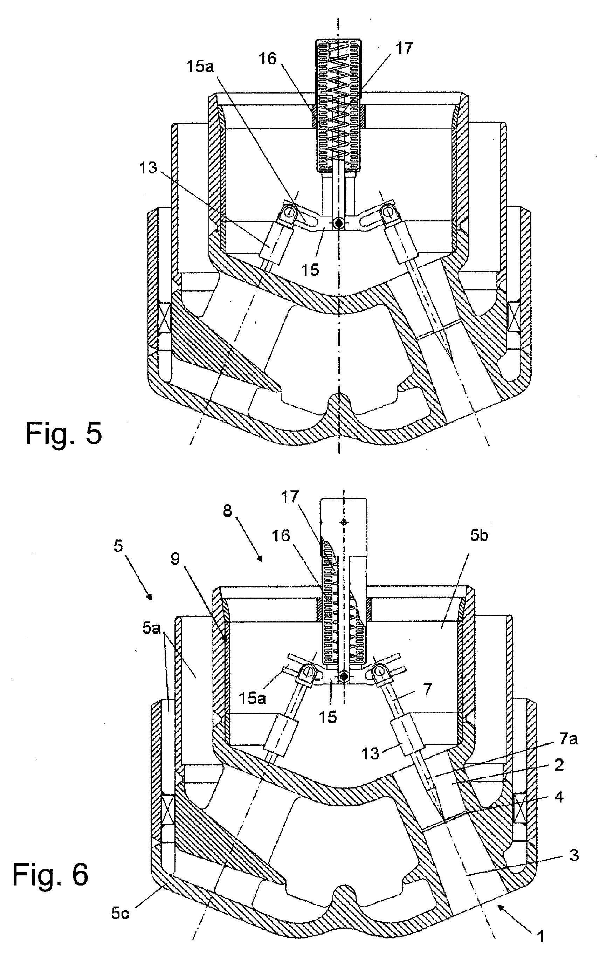

Fig. 5 und Fig. 6 zeigen ein weiteres Ausführungsbeispiel, bei dem der Blaskopf 5 ebenso wie im Beispiel nach Fig. 3 fünf erste Düsenteile 2, 3 mit darin linear verstellbaren zweiten Düsenteilen bzw. Dorngliedern 7 aufweist.

Im Unterscheid zum vorhergehenden Ausführungsbeispiel sind die Dornglieder 7 antriebsseitig jeweils mit einem gemeinsamen Führungsarm 15 mit darin vorgesehenen Kulissen 15a verbunden. Ein Verschieben des Führungsarms 15 entlang der Mittenachse des Blaskopfes 5 führt entsprechend zu einem Verschieben der Dornglieder 7 in ihren Linearführungen 13, wobei die Anlenkungen der Dornglieder an dem Führungsarm 15 in den Kulissen 15a wandern. Der Führungsarm 15 ist seinerseits mit einer Druckdose 16 verbunden, die sich je nach in dem Blaskopf anliegendem Druck in der Richtung der Mittenachse ausdehnt oder zusammenzieht. Die Druckdose kann z.B. als Faltenbalg aus Metall mit einer darin vorgesehenen Kompressionsfeder 17 ausgebildet sein.

Bei dem in Fig. 5 gezeigten Betriebszustand ist die Druckdose maximal komprimiert; das heißt im Blaskopf liegt ein "maximaler Vordruck $p_o$" an, der sich auf das in der Druckdose 16 eingeschlossene Volumen auswirkt. Somit sind die Dornglieder 7 maximal in die ersten Düsenteile 2, 3, 4 eingefahren.

Bei dem in Fig. 6 gezeigten Betriebszustand ist die Druckdose maximal expandiert; das heisst im Blaskopf liegt ein "minimaler Vordruck" an, der sich auf das in der Druckdose 16 eingeschlossene Volumen auswirkt. Somit sind die Dornglieder 7 maximal aus den ersten Düsenteilen 2, 3, 4 ausgefahren und bewirken eine maximale Vergrößerung des engsten Düsenquerschnitts.

Durch diese Ausgestaltung umfasst der Verstellantrieb 8 eine von dem Betriebsdruck $p_o$ des Blaskopfs, also im Prinzip pneumatisch angetriebene Mechanik 15, 16, mittels der die Verstellung der Düsengeometrie eigenständig erfolgen kann. Bei einer solchen Lösung kann insbesondere auf zu dem Blaskopf 5 geführte Steuer- und Versorgungsleitungen verzichtet werden. Zudem kann je nach Anforderungen auf den Einbau von Elektronik in den Blaskopf verzichtet werden.

Es versteht sich, dass die einzelnen Merkmale der verschiedenen Ausführungsbeispiele je nach Anforderungen sinnvoll miteinander kombiniert werden können.

## Patentansprüche

**1.** Vorrichtung zum Einblasen von Gas in ein metallurgisches Gefäß, umfassend einen Blaskopf (5) mit einer Zuleitung (5b) zur Zuführung von Gas, insbesondere Sauerstoff, zu dem Blaskopf (5), und

zumindest eine an dem Blaskopf (5) angeordnete Lavaldüse (1) mit einem das Gas führenden Eintrittsabschnitt (2) und einem Austrittsabschnitt (3),

wobei das Gas dem Eintrittsabschnitt (2) über die Zuleitung (5b) zugeführt wird und den Austrittsabschnitt (3) mit Überschallgeschwindigkeit verlässt, wobei die Lavaldüse (1) zumindest einen ersten Düsenteil (2, 3) und einen zweiten Düsenteil (7) umfasst, wobei die Düsenteile (2, 3, 7) unter Veränderung einer Geometrie der Lavaldüse (1) zueinander verstellbar sind und an dem Blaskopf (5) mehrere Lavaldüsen (1) angeordnet sind, welche jeweils zueinander verstellbare erste und zweite Düsenteile (2, 3, 7) aufweisen **dadurch gekennzeichnet,**

**dass** die beweglichen zweiten Düsenteile (7) mehrerer oder sämtlicher der Lavaldüsen (1) mittels desselben Verstellantriebs (Antriebseinheit 11) simultan verstellbar sind.

**2.** Vorrichtung nach Anspruch 1, **dadurch gekennzeichnet, dass** die Veränderung der Geometrie eine Veränderung eines kleinsten Durchtrittsquerschnitts (4, A\*) zwischen dem Eintrittsabschnitt (2) und dem Austrittsabschnitt (3, $A_e$) umfasst.

**3.** Vorrichtung nach Anspruch 1 oder 2, **dadurch gekennzeichnet, dass** der erste Düsenteil (2, 3) als um eine Kanalachse (S) rotationssymmetrischer Kanal ausgebildet ist, wobei der zweite Düsenteil (7) als entlang der Kanalachse (S) in den Kanal ragendes Dornglied (7) ausgebildet ist.

**4.** Vorrichtung nach Anspruch 3, **dadurch gekennzeichnet, dass** das Domglied (7) eine sich verjüngende Spitze (7a) umfasst, wobei die sich verjüngende Spitze (7a) sich in einen Bereich kleinsten Durchtrittsquerschnitts (4, A\*) des Kanals erstreckt.

**5.** Vorrichtung nach Anspruch 3 oder 4, **dadurch gekennzeichnet, dass** das Dornglied (7) über einen Verstellantrieb (8) entlang der Kanalachse (S) verschiebbar ist.

**6.** Vorrichtung nach Anspruch 5, **dadurch gekennzeichnet, dass** der Verstellantrieb (8) einen hydraulischen oder pneumatischen Aktuator umfasst.

**7.** Vorrichtung nach Anspruch 5, **dadurch gekennzeichnet, dass** der Verstellantrieb (8) einen elektrischen Antrieb (11) umfasst.

**8.** Vorrichtung nach Anspruch 7, dass ein elektrischer Energiespeicher im Bereich des Blaskopfes (5) angeordnet ist.

**9.** Vorrichtung nach einem der Ansprüche 5 bis 8, **dadurch gekennzeichnet, dass** im Bereich des Blaskopfes (5) ein elektrischer Drucksensor (14) angeordnet ist.

**10.** Vorrichtung nach Anspruch 5, **dadurch gekennzeichnet, dass** der Verstellantrieb (8) eine durch den Druck des Gases betriebene Mechanik, vorzugsweise ein Feder-Druckkammer-System (15, 16) umfasst, wobei insbesondere der Verstellantrieb (8) keine Versorgungsleitung umfasst.

**11.** Vorrichtung nach einem der Ansprüche 5 bis 10, **dadurch gekennzeichnet, dass** der Verstellantrieb (8) lösbar an dem Blaskopf (5) festlegbar ist.

## Claims

**1.** Device for injection of gas into a metallurgical vessel, comprising
a blast head (5) with a feed line (5b) for the feed of gas, particularly oxygen, to the blast head (5), and
at least one Laval nozzle (1), which is arranged at the blast head (5), with an inlet section (2) conducting the gas and an outlet section (3),
wherein the gas is fed to the inlet section (2) by way of the feed line (5b) and leaves the outlet section (3) at supersonic speed,
wherein the Laval nozzle (1) comprises at least one first nozzle part (2, 3) and second nozzle part (7), wherein the nozzle parts (2, 3, 7) are adjustable relative to one another with change of the geometry of the Laval nozzle (1) and a plurality of Laval nozzles (1), which each have first and second nozzle parts (2, 3, 7) adjustable relative to one another, is arranged at the blast head (5),
**characterised in that**
the movable second nozzle parts (7) of several or all of the Laval nozzles (1) are adjustable simultaneously by means of the same adjusting drive (drive unit 11).

**2.** Device according to claim 1, **characterised in that** the change of the geometry comprises a change of a smallest passage cross-section (4, A*) between the inlet section (2) and the outlet section (3, $A_e$).

**3.** Device according to claim 1 or 2, **characterised in that** the first nozzle part (2, 3) is constructed as a channel which is rotationally symmetrical about a channel axis (S), wherein the second nozzle part (7) is constructed as a mandrel element (7) projecting along the channel axis (S) into the channel.

**4.** Device according to claim 3, **characterised in that** the mandrel element (7) comprises a tapering tip (7a), wherein the tapering tip (7a) extends in a region of smallest passage cross-section (4, A*) of the channel.

**5.** Device according to claim 3 or 4, **characterised in that** the mandrel element (7) is displaceable along the channel axis (S) by way of an adjusting drive (8).

**6.** Device according to claim 5, **characterised in that** the adjusting drive (8) comprises a hydraulic or pneumatic actuator.

**7.** Device according to claim 5, **characterised in that** the adjusting drive (8) comprises an electric drive (11).

**8.** Device according to claim 7, **characterised in that** an electrical energy store is arranged in the region of the blast head (5).

**9.** Device according to and one of claims 5 to 8, **characterised in that** an electric pressure sensor (14) is arranged in the region of the blast head (5).

**10.** Device according to claim 5, **characterised in that** the adjusting drive (8) comprises a mechanism operated by the pressure of the gas, preferably a spring-and-pressure-chamber system (15, 16), wherein, in particular, the adjusting drive (8) has no supply line.

**11.** Device according to any one of claims 5 to 10, **characterised in that** the adjusting drive (8) is detachably fixable to the blast head (5).

**Revendications**

**1.** Dispositif pour l'insufflation de gaz dans une cuve métallurgique, comprenant une tête de soufflage (5) comprenant une amenée (5b) pour l'approvisionnement de gaz, en particulier d'oxygène, à la tête de soufflage (5), et au moins une tuyère de Laval (1) disposée contre la tête de soufflage (5), comprenant un tronçon d'entrée (2) guidant le gaz et un tronçon de sortie (3), dans lequel le gaz est acheminé au tronçon d'entrée (2) via l'amenée (5b) et quitte le tronçon de sortie (3) à une vitesse supersonique, dans lequel la tuyère de Laval (1) comprend au moins une première partie de tuyère (2, 3) et une deuxième partie de tuyère (7), dans lequel les parties de tuyère (2, 3, 7) peuvent être réglées l'une par rapport à l'autre en modifiant la géométrie de la tuyère de Laval (1) et plusieurs tuyères de Laval (1) sont disposées contre la tête de soufflage (5), qui présentent des premières et deuxièmes parties de tuyère (2, 3, 7) qui peuvent être réglées respectivement les unes par rapport aux autres, **caractérisé en ce que** les deuxième parties de tuyères mobiles (7) de plusieurs ou de l'ensemble des tuyères de Laval (1) peuvent être réglées de manière simultanée au moyen de la même commande de réglage (unité d'entraînement (11)).

**2.** Dispositif selon la revendication 1, **caractérisé en ce que** la modification de la géométrie comprend une modification de la plus petite section de passage (4, A*) entre le tronçon d'entrée (2) et le tronçon de sortie (3, Ao).

**3.** Dispositif selon la revendication 1 ou 2, **caractérisé en ce que** la première partie de tuyère (2, 3) est réalisée sous la forme d'un canal symétrique en rotation autour d'un axe de canal (S), la deuxième partie de tuyère (7) étant réalisée sous la forme d'un membre (7) faisant office de mandrin qui fait saillie dans le canal le long de l'axe (S) du canal.

**4.** Dispositif selon la revendication 3, **caractérisé en ce que** le membre (7) faisant office de mandrin comprend une pointe conique (7a), la pointe conique (7a) s'étendant dans une zone de la plus petite section de passage (4, A*) du canal.

**5.** Dispositif selon la revendication 3 ou 4, **caractérisé en ce que** le membre (7) faisant office de mandrin peut se déplacer, via une commande de déplacement (8) le long de l'axe (S) du canal.

**6.** Dispositif selon la revendication 5, **caractérisé en ce que** la commande de déplacement (8) comprend un actionneur hydraulique ou pneumatique.

**7.** Dispositif selon la revendication 5, **caractérisé en ce que** la commande de déplacement (8) comprend une commande électrique (11).

**8.** Dispositif selon la revendication 7, **caractérisé en ce qu'**un accumulateur d'énergie électrique est disposé dans la zone de la tête de soufflage (5).

**9.** Dispositif selon l'une quelconque des revendications 5 à 8, **caractérisé en ce qu'**un capteur électrique de pression (14) est disposé dans la zone de la tête de soufflage (5).

**10.** Dispositif selon la revendication 5, **caractérisé en ce que** la commande de déplacement (8) comprend une mécanique qui peut être entraînée par la pression du gaz, de préférence un système à ressort-chambre de pression (15, 16), dans lequel en particulier la commande de déplacement (8) ne comprend pas de conduit d'alimentation.

**11.** Dispositif selon l'une quelconque des revendications 5 à 10, **caractérisé en ce que** la commande de déplacement (8) peut être fixée de manière amovible contre la tête de soufflage (5).

Fig. 1

Fig. 2

Fig. 3

Fig. 4

Fig. 4a

Fig. 5

Fig. 6

$$\frac{A_e}{A^*}, Ma_e$$

Ma_e

$$\frac{A_e}{A^*}$$

$$\frac{p_0}{p_u}$$

## Fig. 7

a) Auslegungsfall ($p_e = p_u$)

$p_0$

$p_e$          $p_u$

b) Unterexpansion ($p_e > p_u$)

$p_0$

$p_e$          $p < p_u$          $p > p_u$

c) Überexpansion ($p_e < p_u$)

$p_0$

## Fig. 8

$p_e$          $p_u$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1304391 A2
- GB 1198112 A
- DE 2342003 A1
- EP 0235621 A2
- DE 102009025873 A1